# FASCICULE DE BREVET EUROPEEN

(11) **EP 1 935 564 B1**
(45) Date de publication et mention de la délivrance du brevet: **23.11.2011**
(21) Numéro de dépôt: 07150243.9
(22) Date de dépôt: 20.12.2007
(51) Int. Cl.: B24B 9/02, B24B 21/16, B24B 27/00, B24B 41/06, B24B 27/04, B24B 45/00

(54) **Machine de finition**
Endbearbeitungsmaschine
Finishing machine

(30) Priorité: 21.12.2006 CH 20722006
(43) Date de publication de la demande: 25.06.2008
(73) Titulaire: Crevoisier SA, 2714 Les Genevez (CH)
(72) Inventeur: Crevoisier, Philippe, 2714, Les Genevez (CH); Ramseyer, Nicolas, 2714, Les Genevez (CH)
(74) Mandataire: P&TS SA (AG, Ltd.)

(56) Documents cités:
- EP-A- 0 483 064
- EP-A1- 0 462 057
- DE-A1- 3 442 011
- DE-A1- 4 412 417
- DE-A1- 10 356 343
- FR-A1- 2 629 747
- US-A- 3 024 575

## Description

### Domaine technique

La présente invention concerne une machine de terminaison à plusieurs axes commandée par CNC.

### Etat de la technique

Lors de la fabrication et de l'usinage des pièces métalliques, les opérations de terminaison visent notamment à modifier l'état de surface des pièces produites. La terminaison est un processus lent, effectué après l'usinage proprement dit, et nécessitant une multitude d'opérations successives de ponçage, de brossage, de feutrage, de satinage, lapidage etc afin de donner à la pièce terminée l'état de surface métallique désiré. Dans la présente demande, les opérations d'ébavurage sont également considérées comme des exemples particuliers d'opérations de terminaison.

Les différentes opérations de terminaison mettent en oeuvre différents outils, par exemple différents disques ou rubans abrasifs, brosses, meules avec des grains variables. Les multiples machines de terminaison employées successivement pour terminer la surface externe d'une pièce complexe, par exemple une boîte de montre, un maillon de bracelet, des lunettes, un instrument d'écriture, etc, occupent donc une surface importante dans un atelier ou une manufacture. Par ailleurs, l'opérateur doit passer d'une machine à l'autre pour polir, meuler, brosser etc les différentes parties d'une pièce avec outils avec des grains de plus en plus fins.

La demanderesse propose depuis plusieurs années des machines motorisées pour le meulage, satinage, polissage etc. Ces machines sont connues sous le nom de lapidaires, bonne à tout faire, machine à polir, machine pour la préparation, machine de terminaison et peuvent être équipées d'une grande variété d'outils de terminaison qui peuvent être remplacés rapidement. Les machines ne sont pas dotées de commandes numériques en sorte que l'opérateur doit effectuer tous les déplacements de pièce ou d'outil manuellement. Par ailleurs, il est nécessaire de démonter et de remonter manuellement les outils à chaque remplacement; cette opération, bien que facilitée par le système de fixation d'outil, nécessite un temps important.

DE4430113 décrit une machine d'usinage avec deux poupées et un revolver porte-outil destiné à des outils tournants ou à des outils de polissage. L'emploi d'un revolver permet de remplacer un outil entre deux opérations sans le démonter. La construction de cette machine ne permet cependant pas de monter des bandes de polissage ou d'autres outils très volumineux sur le revolver.

US3024575 décrit un appareil de polissage comportant une tourelle rotative munie de différents outils abrasifs. L'appreil n'est pas commandé numériquement. La pièce à terminer peut uniquement effectuer des mouvements simples, par exemple des rotations autour d'un seul axe parallèle à l'axe d'indexation de la tourelle. L'entraînement des différents outils se fait à l'aide de moteurs dédiés, chaque outil comportant son propre moteur. Les outils sont donc encombrants, coûteux, difficiles à cabler électriquement et difficiles à synchroniser entre eux.

FR2629747 décrit une machine de finissage de pièces moulées ou usinées comprenant une table tournante avec plusieurs broches porte-pièces. Un outil de finissage, par exemple une bande abrasive, permet de polir à tour de rôle les différentes pièces portées par la table. Cette machine est peu adaptée au finissage de pièces volumineuses ou compliquées qui ne peuvent pas être portées sur une table. La table ne comporte pas d'axe, hormis l'axe d'indexation, et ne permet pas de déplacement complexe de la pièce à terminer.

Une solution similaire à celle de FR2629747 est aussi décrite dans DE3442011.

EP483064 décrit une machine à polir, notamment pour polir des hélices, des pales de turbines ou d'autres pièces allongées. Elle comporte une tourelle motorisée avec deux bandes abrasives sans fin qui peuvent être sélectionnées pour polir la pièce. La tourelle peut pivoter de 90° pour charger de nouvelles bandes depuis un magasin. Une unité porte-pièce permet de présenter la pièce à terminer en regard de la bande abrasive.

DE4412417 concerne un robot avec un bras articulé pour polir des boîtes de montre. Différents outils de polissage peuvent être employés.

DE10356343 décrit un autre robot à bras articulé pour le polissage. La tête de robot comporte trois outils de polissage sélectionnables.

EP 462 057 décrit une machine à commande numérique pour l'affûtage d'outils de coupe comportant les caractéristiques du préambule de la revendication 1.

### Bref résumé de l'invention

Un but de la présente invention est notamment de proposer une machine de terminaison exempte des limitations des machines connues.

Selon l'invention, ce but est atteint en particulier au moyen d'une machine de terminaison pour modifier l'état de surface de pièces préusinées selon les revendications 1 et 13, comportant une tourelle avec N postes pour monter simultanément différents outils de terminaison. Des moyens motorisés sont commandés numériquement pour faire pivoter la tourelle de manière à sélectionner un outil, parmi lesdits outils montés simultanément sur la tourelle, qui est présenté en regard d'une pièce à usiner. Une unité porte-pièce motorisée permet de présenter une pièce à terminer en regard de l'outil sélectionné. L'outil sélectionné et la pièce à usiner peuvent être déplacés l'un par rapport à l'autre selon au moins un axe linéaire. Des déplacements selon au moins un axe rotatif sont aussi possibles. Les axes peuvent être motorisés, pneumatiques, hydrauliques ou même manuels.

Par ailleurs, au moins un desdits outils est constitué par une bande abrasive tendue entre des moyeux et entraînée via ladite tourelle, et/ou un disque abrasif entraîné par la tourelle.

Cette construction présente notamment l'avantage de permettre une terminaison de pièces à l'aide de différents outils de terminaison, y compris des outils volumineux comme des bandes abrasives, sans devoir démonter les outils entre deux opérations successives. Par ailleurs, les déplacements relatifs de la pièce et de l'outil selon au moins un axe linéaire ou rotatif et commandés numériquement permet d'orienter les outils de terminaison par rapport à la pièce sans réclamer d'intervention de l'opérateur.

Au moins certains outils montés sur la tourelle sont entrainés par la tourelle, à l'aide d'un moteur électrique ou d'un actuateur lié à la tourelle. On évite ainsi d'employer un moteur dédié pour chaque outil, ce qui permet de réduire le coût total et l'encombrement des outils. Les outils sont actionnés à l'aide d'une ou plusieurs prises de force permettant de transmettre une force ou un couple entre le moteur de la tourelle et l'outil actionné en chaque instant.

L'usage d'une seule commande numérique pour commander à la fois les axes de l'unité porte-pièces et les axes de la tourelle respectivement des outils permet de synchroniser les différents déplacements et d'effectuer par exemple des mouvements d'interpolation impossibles à réaliser sans cette synchronisation.

### Brève description des dessins

Des exemples de mise en oeuvre de l'invention sont indiqués dans la description illustrée par les figures annexées dans lesquelles :

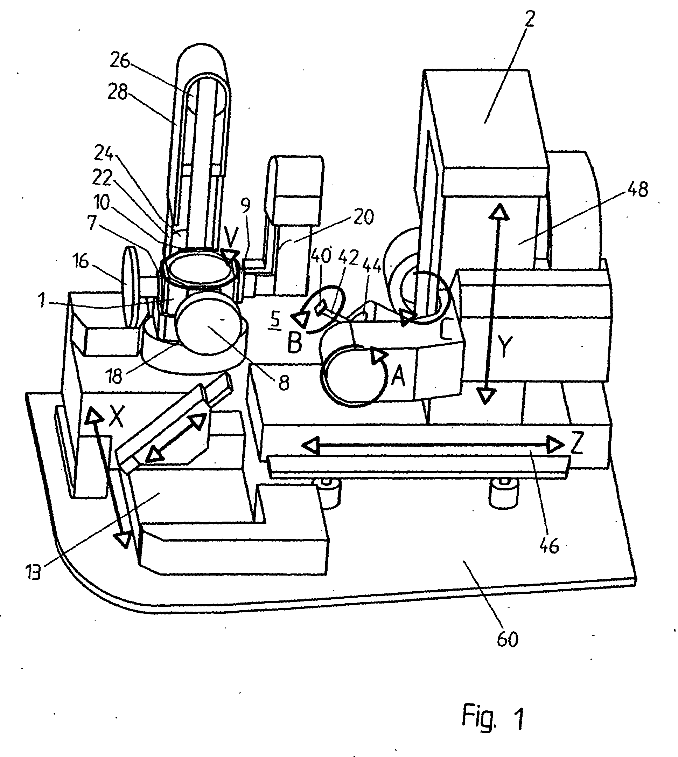

La figure 1 illustre une vue en perspective d'une machine de terminaison selon l'invention.

### Exemple(s) de mode de réalisation de l'invention

La machine illustrée à titre d'exemple sur la figure 1 comporte un châssis 60 avec une unité porte-outil à gauche sur la figure et une unité porte-pièce 2 à droite. Le châssis peut comporter un capot non illustré. L'unité porte-outil comporte essentiellement une tourelle 1 en rotation autour d'un axe V perpendiculaire au châssis, ici un axe vertical. La tourelle peut en outre coulisser par rapport au châssis selon un axe X sur une coulisse mettant en oeuvre des rails et des vis à billes.

La tourelle comporte dans cet exemple quatre postes 7, 8, 9 et 10 permettant de monter jusqu'à quatre outils semblables ou différents. Des tourelles comportant un nombre de postes différents sont envisageables ; l'espace angulaire entre les outils doit cependant être suffisant pour empêcher la collision entre des outils volumineux sur des postes voisins.

L'axe motorisé V permet d'indexer la tourelle afin de présenter un outil sélectionné face à l'emplacement d'usinage 5 en regard de l'unité porte-pièce. Chaque poste comporte une broche ou un autre moyen d'entraînement de l'outil ; la broche en regard de l'emplacement d'usinage 5 peut être entraînée en rotation au travers d'un mécanisme non illustré dans la tourelle. Dans une variante préférentielle, l'axe V permet en outre de positionner la tourelle selon un angle quelconque, avec une résolution de préférence inférieure au degré, afin d'orienter l'outil selon un angle quelconque par rapport à la pièce à usiner.

Dans l'exemple illustré, la tourelle est munie des outils suivants :
■ Un premier disque abrasif 16 sur le poste 7, par exemple une meule, une brosse à satiner, un feutre, un disque abrasif monté sur un disque support en en fonte ou en matériau synthétique, etc.
■ Un deuxième disque abrasif 18 sur le poste 8, par exemple un disque de type différent ou avec un grain différent.
■ Un premier dispositif 20 pour entraîner une bande (courroie) abrasive tendue entre deux moyeux sur le poste 9. Les moyeux peuvent être constitués par de simples rouleaux en caoutchouc, le moyeu inférieur étant entraîné directement par la broche. Le ponçage ou polissage peut de préférence être effectué en appuyant la pièce contre une surface plane parallèle à l'axe de la broche, ou contre une surface courbée, derrière la bande en déplacement. Par ailleurs, la position verticale du moyeu supérieure par rapport au moyeu inférieure peut de préférence être ajustée manuellement afin de modifier l'encombrement et/ou le plan de la bande abrasive.
■ Un deuxième dispositif 22 pour entraîner une deuxième bande abrasive entre les deux moyeux 24 et 26 (poste 10).

D'autres types d'outils de terminaison non illustrés peuvent être montés sur les différents postes, y compris :
■ Un mandrin, par exemple un mandrin à serrage rapide auto-serrant, permettant de monter et de remplacer facilement des petites meules, fraises, etc.
■ Une queue de rat pour limer ou travailler des ouvertures ou des portions concaves de la pièce.
■ Un dispositif « entre-cornes » comportant une bande abrasive spécialement adaptée pour le polissage des boîtes de montre entre les deux cornes d'attache du bracelet.
■ Des brosses à satiner, feutres, tampons à polir, etc.

Les différents outils sont fixés sur les broches respectives de la tourelle par exemple entre deux flasques traversées par un tasseau, c'est-à-dire un axe perforé avec au moins une portée d'appui pour les flasques. Le tasseau peut être vissé dans la broche au moyen d'une vis de serrage traversant l'ouverture axiale dans le tasseau. D'autres outils peuvent être montés à l'aide d'un axe directement vissé dans la broche.

L'unité porte-pièce 2 permet essentiellement de présenter une pièce à usiner 40 en regard de l'outil sélectionné sur l'emplacement 5. Elle est montée sur une coulisse horizontale 46 selon l'axe Z (perpendiculaire à X) afin de se rapprocher ou de s'éloigner de l'unité porte-outil. Une coulisse verticale 48 en Y permet d'ajuster la distance entre la pièce et la base 60. L'outil sélectionné et la pièce à usiner 40 peuvent donc être déplacés l'un par rapport à l'autre selon trois axes linéaires orthogonaux motorisés X, Y et Z. Par ailleurs, un axe de rotation motorisé horizontal A parallèle à l'axe X permet de faire tourner la pièce usinée afin de modifier l'angle d'attaque par rapport à l'outil. Un second axe de rotation motorisé B optionnel, parallèle à l'axe de la pince porte-pièce et dans un plan vertical, permet de faire tourner la pièce sur elle-même. Un troisième axe de rotation motorisé horizontal (C), optionnel,permet de corriger l'orientation de la pièce ; dans un mode de réalisation préférentiel cet axe permet d'orienter la pièce uniquement selon deux positions angulaires prédéfinies espacées angulairement de 90°. Un axe C comportant davantage de positions d'indexation, ou même un axe C permettant une rotation en continu, afin de réaliser des mouvements d'interpolation au cours de l'usinage, peuvent aussi être envisagés.

Dans un autre mode de réalisation non illustré, l'unité porte-pièce est constituée par un bras polyarticulé, par exemple un bras motorisé polyarticulé avec une ou plusieurs articulations.

D'autres axes de translation et de rotation peuvent être prévus dans le cadre de l'invention. Les 7 axes (X, Y, Z, A, B, C, V) de la machine illustrée constituent cependant un compromis optimal entre les degrés de liberté nécessaires, la rapidité de déplacement souhaitée et le coût et encombrement de la machine. Les axes sont de préférence commandés numériquement à l'aide d'une commande CNC non représentée, afin de permettre des déplacements d'outil et de la pièce, ainsi que des indexations de la tourelle, sans intervention manuelle. La commande CNC permet en outre de préférence des mouvements d'interpolation, c'est-à-dire des déplacements de la pièce et/ou de l'outil au cours de l'usinage, et notamment des mouvements d'interpolation selon l'axe C afin d'usiner des pièces complexes.

L'unité porte-pièce est de préférence équipée d'un système de serrage de pièce interchangeable. Dans une variante préférentielle, la machine peut être équipée au choix d'une pince expansible pneumatique ou d'un serre-pièce amovible de type Erowa (marque déposée), Mecatool (marque déposée) ou similaire, ou d'un système de maintien par vacuum, ou actionnable manuellement, pour saisir la pièce usinée.

La machine illustrée sur la figure comporte un axe linéaire X sur l'unité porte-outils et deux axes linéaires Y et Z sur l'unité porte-pièces. D'autres répartitions sont possibles; il est par exemple possible de prévoir trois axes X, Y et Z du côté de l'unité porte-pièce, ou n'importe quelle répartition souhaitable en tenant compte de la nécessité d'éviter des déplacements fréquents des outils beaucoup plus lourds et encombrants que la pièce.

D'autre part, la disposition illustrée peut aussi être tournée de 90° en mettant l'axe Z vertical et les axes X et Y dans un plan de bâti horizontal.

Dans l'exemple illustré, l'unité porte-pièce est motorisée et commandée par une machine à commande numérique CNC. D'autres types d'unités porte-pièce peuvent cependant être employés en regard de la tourelle porte-outil, y compris des bras polyarticulés ou des robots. La tourelle peut aussi être vendue pour elle-même, sans unité porte-pièce.

### Liste des symboles de référence utilisés

- 1: Tourelle
- 2: Unité porte-pièce
- 5: Emplacement d'usinage
- 7-10: Postes pour fixer les outils sur la tourelle (broches)
- 13: Coulisse (axe X)
- 16: Premier disque abrasif sur poste 7
- 18: Deuxième disque abrasif sur poste 8
- 20: Bande abrasive sur poste 9
- 22: Bande abrasive sur poste 10
- 24: Premier moyeu de tension et d'entraînement de la bande 22
- 26: Deuxième moyeu de tension de la bande 22
- 28: Capot protecteur
- 40: Pièce usinée
- 42: Serrage de pièce amovible
- 44: Broche porte-serrage
- 46: Coulisse axe Z
- 48: Coulisse axe Y
- 60: Châssis de la machine

## Revendications

1. Machine de terminaison pour modifier l'état de surface de pièces préusinées, comportant :
une commande numérique,
une tourelle (1) avec N postes (7-10) permettant de monter simultanément différents outils de terminaison (16, 18, 20, 22),
des moyens motorisés commandés numériquement pour faire pivoter la tourelle de manière à sélectionner l'outil, parmi lesdits outils montés simultanément sur la tourelle, qui est présenté en regard d'une pièce à usiner (40),
une unité porte-pièce (2) commandée numériquement pour présenter ladite pièce (40) en regard dudit outil sélectionné,
**caractérisée en ce que** ladite unité porte-pièce comporte un axe de rotation (B) motorisé dans un plan vertical, dit deuxième axe, afin de faire tourner la pièce usinée,
et **en ce que** lesdits outils de terminaison comportent une bande abrasive (22) tendue entre des moyeux (24, 26) et entraînée via ladite tourelle, et/ou un disque abrasif (16, 18) entraîné par la tourelle.

2. La machine de la revendication 1, dans laquelle au moins un des outils est constitué par une meule.

3. La machine de l'une des revendications 1 ou 2, dans laquelle ladite unité porte-pièce (2) est motorisée et permet de déplacer ladite pièce (40) selon au moins deux axes indépendants (A, B, C, Y, Z).

4. La machine de l'une des revendications 1 à 3, dans laquelle l'outil sélectionné (20) et la pièce à usiner (40) peuvent être déplacés l'un par rapport à l'autre selon au moins deux axe linéaires (X, Y, Z) ou rotatifs (A, B, C) orthogonaux et motorisés.

5. La machine de la revendication 1 à 4, dans laquelle au moins un mandrin est fixé sur un desdits postes (7-10).

6. La machine de l'une des revendications 1 à 5, dans laquelle au moins un mandrin est fixé sur un desdits postes (7-10) afin d'entraîner une brosse à satiner, un feutre ou un tampon à polir.

7. La machine de l'une des revendications 1 à 6, dans laquelle ladite unité porte-pièce comporte un premier axe de rotation motorisé (A) perpendiculaire à l'axe de rotation de l'outil sélectionné pour faire tourner la pièce usinée (40).

8. La machine de l'une des revendications 1 à 7, dans laquelle ladite unité porte-pièce comporte un troisième axe de rotation motorisé (C) horizontal, afin de faire tourner la pièce usinée.

9. La machine de la revendication 8 dans lequel ledit troisième axe de rotation (C) est destiné à orienter ladite pièce (40) selon l'une parmi deux positions possibles, lesdites positions étant perpendiculaires l'une à l'autre.

10. La machine de l'une des revendications 1 à 9, dans laquelle ladite unité porte-pièce (2) est constituée par un robot polyarticulé.

11. La machine de l'une des revendications 1 à 10, dans laquelle ladite unité porte-pièce (2) est équipée d'un système de serrage de pièce interchangeable.

12. La machine de l'une des revendications 1 à 11, dans laquelle ladite unité porte-pièce (2) est équipée d'une pince expansible pneumatique pour saisir la pièce usinée.

13. Procédé de terminaison de pièces comprenant les étapes suivantes :
indexation d'une tourelle (1) porte-outil de manière à sélectionner un outil de terminaison (20) parmi plusieurs outils de terminaison (16, 18, 20, 22) montés simultanément sur la tourelle, et à mettre cet outil en regard d'une pièce à usiner (40), une unité porte-pièce (2) commandée numériquement présentant ladite pièce (40) en regard dudit outil sélectionné,
déplacements relatifs de la pièce (40) et de l'outil (20) selon plusieurs axes motorisés (A, B, C, X, Y, Z),
**caractérisée en ce que** lesdits outils de terminaison comportent un disque abrasif (16, 18) et une bande abrasive (20, 22) tendue entre des moyeux (24, 26) et entraînée via ladite tourelle, et **en ce que** ladite unité porte-pièce comporte un axe de rotation (B) motorisé dans un plan vertical, dit deuxième axe, afin de faire tourner la pièce usinée.

## Claims

1. Finishing machine for modifying the surface status of pre-machined workpieces, comprising:
a numerical control,
a turret (1) with N positions (7-10) allowing to mount different finishing tools simultaneously (16, 18, 20, 22),
numerically-driven motor means for turning the turret in a manner as to select the tool, among the tools mounted on the turret simultaneously, that is presented in juxtaposition to a workpiece to be finished (40),
a workpiece-holding unit (2) driven numerically to present said workpiece (40) in juxtaposition to said selected tool,
**characterised in that** said workpiece-holding unit has a motorised rotation axis (B) in a vertical plane, termed second axis, so as to rotate said workpiece,
and **characterised in that** said finishing tools comprises an abrasive belt (22) tensioned between two pulleys (24, 26) and driven through said turret, and an abrasive wheel (16, 18) driven by said turret.

2. The finishing machine of claim 1, in which at least one of the tools consist in a grinding wheel.

3. The finishing machine of any of claims 1 or 2, whereby said workpiece -holding unit (2) is motorised and allows moving said workpiece (40) according to at least two independent axes (A, B, C, Y, Z).

4. The finishing machine of any of claims 1 to 3, whereby the selected tool (20) and the workpiece (40) can be moved relative to one another according to at least two orthogonal motorised linear (X, Y, Z) or rotary (A, B, C) axes.

5. The finishing machine of any of claims 1 to 4, whereby at least a chuck is fixed on one of said positions (7-10).

6. The machine of any of claims 1 to 5, whereby at least a chuck is fixed on one of said positions (7-10) so as to drive a glazing brush, felt, or polishing pad.

7. The machine of any of claims 1 to 6, whereby the workpiece-holding unit comprises a first motorized rotation axis (A) perpendicular to the rotation axis of the selected tool in order to rotate the workpiece (40).

8. The machine of one of the claims from 1 to 7, in which the workpiece-holding unit has a third horizontal motorised rotation axis (C) in order to rotate the workpiece.

9. The machine of claim 8, in which said third rotation axis (C) is arranged to orient the workpiece (40) according to one in two possible mutually perpendicular positions.

10. The machine of one of the claims from 1 to 9, in which said workpiece-holding unit (2) consist in a multiple-articulation robot.

11. The machine of one of claims from 1 to 10, whereby said workpiece-holding unit (2) is equipped with an interchangeable holding collet.

12. The machine of one of the claims from 1 to 11, in which said workpiece-holding unit (2) is equipped with a pneumatic expansive collet to hold the workpiece.

13. Finishing process comprising the following steps :
indexation of a tool-holding turret (1) so as to select a finishing tool among a plurality of finishing tools (16, 18, 20, 22) simultaneously mounted on the turret, and to place said tool in juxtaposition to a workpiece (40), whereby a numerically-controlled workpiece-holding (2) unit presents said workpiece (40) in juxtaposition to said selected tool,
relative motion of the workpiece (40) and tool (20) by a plurality of motorised axis (A, B, C, X, Y, Z),
**characterised in that** at least one of said finishing tools comprise an abrasive wheel (16, 18) and an abrasive belt (20, 22) tensioned between two pulleys (24, 26) and driven through said turret, and in said workpiece-holding unit comprising a motorised rotation axis (B) in a vertical plane, termed second axis, so as to rotate said workpiece.

## Patentansprüche

1. Endbearbeitungsmaschine, um den Oberflächenzustand von vorgefertigten Werkstücken zu verändern, umfassend:
einen numerischen Antrieb,
einen Revolverkopf (1) mit N Positionen (7-10), welcher erlaubt, mehrere Endbearbeitungswerkzeug (16, 18, 20, 22) gleichzeitig zu montieren,
digital angetriebene, motorisierte Mittel, um den Revolverkopf in einer Art zu drehen, um das Werkzeug aus den gleichzeitig montierten Werkzeugen auszuwählen, welches gegenüber einem endzubearbeitenden Werkstück (40) präsentiert wird,
eine Werkstückhalteeinheit (2), die digital angetrieben wird, um besagtes Werkstück (40) gegenüber dem ausgewählten Werkstück zu präsentieren,
**gekennzeichnet dadurch, dass** besagte Werkstückhalteeinheit eine motorisierte Rotationsachse (B) in einer vertikalen Ebene aufweist, genannt zweite Achse, um das Werkstück rotieren zu lassen,
und charakterisiert **dadurch**, dass besagte Endbearbeitungswerkzeuge ein abrasives Band (22), das zwischen zwei Antriebsscheiben (24, 26) gespannt und durch den Revolverkopf angetrieben ist, und eine abrasive Scheibe (16, 18), die durch den Revolverkopf angetrieben ist, umfassen.

2. Die Maschine gemäss Anspruch 1, in welcher mindestens eines der Werkzeuge aus einem Schleifrad besteht.

3. Die Maschine nach einen der Ansprüche 1 oder 2, wobei besagte Werkstückhalteeinheit (2) motorisiert ist und das Bewegen besagten Werkstücks (40) gemäss mindestens zwei unabhängigen Achsen (A, B, C, Y, Z) erlaubt.

4. Die Maschine nach einen der Ansprüche 1 bis 3, in welchem das ausgewählte Werkzeug (20) und das Werkstück (40) relativ zueinander gemäss mindestens zwei orthogonalen motorisierten linearen (X, Y, Z) oder rotierenden (A, B, C) Achsen bewegt werden kann.

5. Die Maschine nach einen der Ansprüche 1 bis 4, wobei mindestens ein Spannfutter auf einer von besagten Positionen (7-10) befestigt ist.

6. Die Maschine nach einen der Ansprüche 1 bis 5, wobei mindestens ein Spannfutter auf einer von besagten Positionen (7-10) befestigt ist, um so eine Satinierbürste, einen Filz oder einen Polierlappen anzutreiben.

7. Die Maschine nach einen der Ansprüche 1 bis 7, in welcher besagte Werkstückhalteeinheit eine erste motorisierte Rotationsachse (A) umfasst, die senkrecht zu der Rotationsachse von dem ausgewählten Werkzeug ist, um das Werkstück (40) zu rotieren.

8. Die Maschine nach einen der Ansprüche 1 bis 7, in welcher in welcher besagte Werkstückhalteeinheit eine dritte horizontale motorisierte Achse (C) umfasst, um das Arbeitsstück rotieren zu lassen.

9. Die Maschine nach Anspruch 8, in welcher besagte dritte Rotationsachse (C) angeordnet ist, um das Werkstück (40) gemäss einer von zwei möglichen, gegenseitig senkrechten Positionen zu orientieren.

10. Die Maschine nach einen der Ansprüche 1 bis 9, in welcher besagte Werkstückhalteeinheit (2) aus einen mehrfach gelenkigem Roboter besteht.

11. Die Maschine nach einen der Ansprüche 1 bis 10, wobei besagte Werksstückhalteeinheit (2) mit einer austauschbaren Halteklemmbuchse ausgestattet ist.

12. Die Maschine nach einen der Ansprüche 1 bis 11, in welcher besagte Werkstückhalteeinheit (2) mit einer pneumatisch expansiven Klemmbuchse ausgestattet ist, um das Arbeitsstück zu halten.

13. Endbearbeitungsprozess umfassend die folgenden Schritte:
Indexierung von einem Werkzeughalterrevolverkopf (1), um eine Endbearbeitungswerkzeug unter einer Vielzahl von Endbearbeitungswerkzeugen (16, 18, 20, 22), die gleichzeitig auf dem Revolverkopf montiert sind, auszuwählen, und besagtes Werkzeug gegenüber einem Werkzeug (40) zu platzieren, wobei eine digital kontrollierte Werkstückhalteeinheit (2) das ausgewählte Werkzeug gegenüber besagtem Werkzeug präsentiert,
relative Bewegung des Werkstücks (40) und des Werkzeugs (20) durch eine Vielzahl durch eine Vielzahl von motorisierten Achsen (A, B, C, X, Y, Z),
**gekennzeichnet dadurch, dass** mindestens eines der besagter Endbearbeitungswerkstücke eine abrasive Scheibe (16, 18) und ein abrasives Band (20, 22), das zwischen zwei Antriebsscheiben (24, 26) gespannt und durch den Revolverkopf angetrieben ist, umfassen, und **dadurch, dass** besagte Werkzeughalteeinheit eine motorisierte Rotationsachse (B) in einer vertikalen Ebene, benannt zweite Achse, aufweist, um besagtes Arbeitsstück zu rotieren.
